# EUROPÄISCHE PATENTSCHRIFT

(11) **EP 2 640 600 B1**
(45) Veröffentlichungstag und Bekanntmachung des Hinweises auf die Patenterteilung: **01.03.2017**
(21) Anmeldenummer: 11790869.9
(22) Anmeldetag: 16.11.2011
(51) Int. Cl.: B60N 2/225

(54) **VERSTELLVORRICHTUNG EINES FAHRZEUGSITZES MIT EINER SELBSTVERSTELLBREMSE**
ADJUSTING DEVICE FOR A VEHICLE SEAT HAVING A SELF-ADJUSTING BRAKE
DISPOSITIF DE RÉGLAGE D'UN SIÈGE DE VÉHICULE PRÉSENTANT UN FREIN À AUTO-AJUSTEMENT

(30) Priorität: 16.11.2010 DE 102010051401
(43) Veröffentlichungstag der Anmeldung: 25.09.2013
(73) Patentinhaber: Johnson Controls GmbH, 51399 Burscheid (DE)
(72) Erfinder: KIRUBAHARAN, Albert, Reginold, 51399 Burscheid (DE); JUERGEN, Otto, 51399 Burscheid (DE); MAI, Helmut, 40591 Düsseldorf (DE); CHANDURE, Sachin, 51379 Opladen (DE)
(74) Vertreter: Wolff, Felix
(86) Internationale Anmeldenummer: PCT/EP2011/005762
(87) Internationale Veröffentlichungsnummer: WO 2012/065721

(56) Entgegenhaltungen:
- WO-A1-2010/102413
- DE-A1- 19 500 914

## Beschreibung

Die vorliegende Erfindung betrifft eine Verstellvorrichtung für eine Fahrzeugkomponente, insbesondere für die Rückenlehne eines Fahrzeugsitzes mit einem ersten und einem zweiten Beschlagteil, die entlang einer Drehachse angeordnet sind, wobei die relative Lage der beiden Beschlagteile zueinander veränderbar ist, wobei ein Drehmoment von einem Antrieb auf ein Zahnrad übertragen wird, das an dem zweiten Beschlagteil abrollt und dadurch das zweite Beschlagteil verstellt. Des Weiteren betrifft die vorliegende Erfindung ein Zahnrad einer Verstellvorrichtung einer Fahrzeugkomponente, insbesondere der Rückenlehne eines Kraftfahrzeugsitzes.

Derartige Verstellvorrichtungen, die im Fahrzeugbau beispielsweise auch als Recliner bezeichnet werden, sind aus dem Stand der Technik hinlänglich bekannt. Beispielsweise offenbart WO 2010/102413 A1 einen Scheiben-Recliner, Bei diesen Verstellvorrichtungen besteht jedoch der Nachteil, dass sie sich durch Abnutzung und/oder Vibration selbst verstellen, was unerwünscht ist.

Es war deshalb die Aufgabe der vorliegenden Erfindung, eine Verstellvorrichtung zur Verfügung zu stellen, die die Nachteile des Standes der Technik nicht aufweist.

Gelöst wird die Aufgabe mit einer Verstellvorrichtung für eine Fahrzeugkomponente, insbesondere für die Rückenlehne eines Fahrzeugsitzes, gemäß Anspruch 1.

Vorzugsweise weist das Bremsmittel mindestens einen, vorzugsweise zwei Arme auf, der/die insbesondere federnd vorgesehen ist/sind. Jeder Arm weist an seinem einen Ende vorzugsweise ein Blockierelement auf, das verhindert, dass sich der Exzenter selbsttätig relativ zu der Verriegelungskontur, die an dem Zahnrad vorgesehen ist, oder einem anderen Teil der Verstellvorrichtung verstellt. Jedes Blockierelement wirkt kraft- und/oder formschlüssig mit der Verriegelungskontur vorzugsweise in einer Vielzahl von unterschiedlichen Stellungen verriegelnd zusammen. Das Bremsmittel verhindert selbsttätige Verstellungen vorzugsweise in beide Drehrichtungen, wobei ein Blockierelement vorzugsweise nur in eine Drehrichtung blockiert. Die Verriegelungskontur weist vorzugsweise eine Vielzahl von Kraft- und/oder Formschlussmitteln, beispielsweise Zähnen oder zahnähnlichen Strukturen, auf, die vorzugsweise äquidistant angeordnet sind. Vorzugsweise ist die Verriegelungskontur kreisringförmig angeordnet.

Vorzugsweise ist jeder Arm elastisch so vorgespannt, dass er das Blockierelement gegen beispielsweise die Verriegelungskontur oder ein anderes Element des Recliners drückt.

Weiterhin bevorzugt weist der Arm eine Rampe auf, die beispielsweise mit einem Antriebsmittel zusammenwirkt und dadurch das Bremsmittel wahlweise entriegelt, insbesondere, indem der Arm des Bremsmittels gegen seine Vorspannrichtung elastisch verformt wird.

Vorzugsweise ist die Verriegelungskontur im Bereich des inneren Durchmessers des Zahnrades vorgesehen. Besonders bevorzugt ist die Verriegelungskontur kraft- und/oder stoffschlüssig mit dem Zahnrad verbunden. Vorzugsweise ist die Verriegelungskontur einstückig mit dem Zahnrad vorgesehen. Vorzugsweise oder erfindungsgemäß weist das Zahnrad insbesondere an seinem inneren Umfang eine Verriegelungskontur, beispielsweise Einbuchtungen, auf, mit denen das Blockierelement des Bremsmittels blockierend zusammen wirken kann.

, Gemäß einer Ausführungsform der Erfindung ist die axiale Erstreckung des Lagers des Zahnrades größer als die axiale Erstreckung der Zähne des Zahnrades. Dadurch wird die Lagerung des Zahnrades stabiler.

Gemäß einer weiteren Ausführungsform der vorliegenden Erfindung weist das Zahnrad eine Dichtfläche auf. Durch diese Dichtfläche wird verhindert, dass Dreck, Farbe oder Flüssigkeit in die Verstellvorrichtung gelangt. Vorzugsweise ist die Dichtfläche in radialer Richtung vorgesehen.

Vorzugsweise wirkt die Dichtfläche dichtend mit einer Abdeckung und/oder dem Antriebsmittel der erfindungsgemäßen Verstellvorrichtung zusammen.

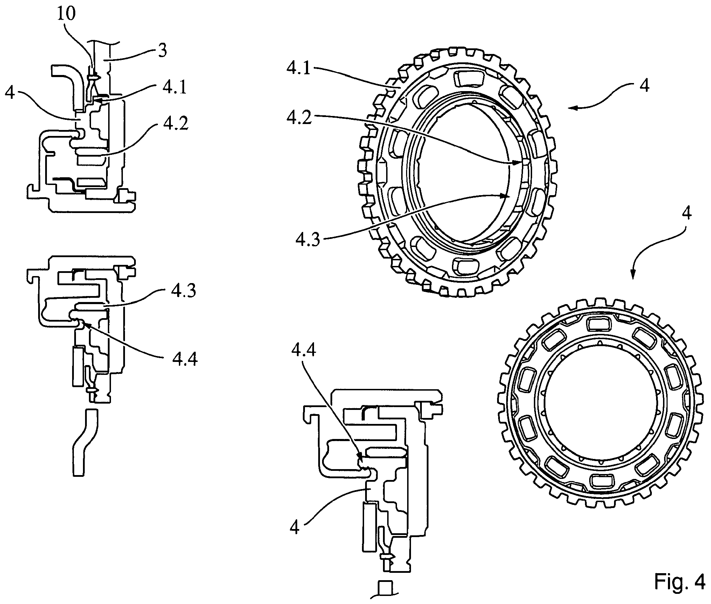

Im Folgenden wird die Erfindung anhand der Figuren 1 - 4 erläutert. Diese Erläuterungen sind lediglich beispielhaft und gelten für alle Erfindungen gleichermaßen.
- Figur 1: zeigt eine Explosionszeichnung der erfindungsgemäßen Verstelleinrichtung.
- Figur 2: zeigt das Bremsmittel.
- Figur 3: zeigt eine weitere Ausführungsform des Bremsmittels.

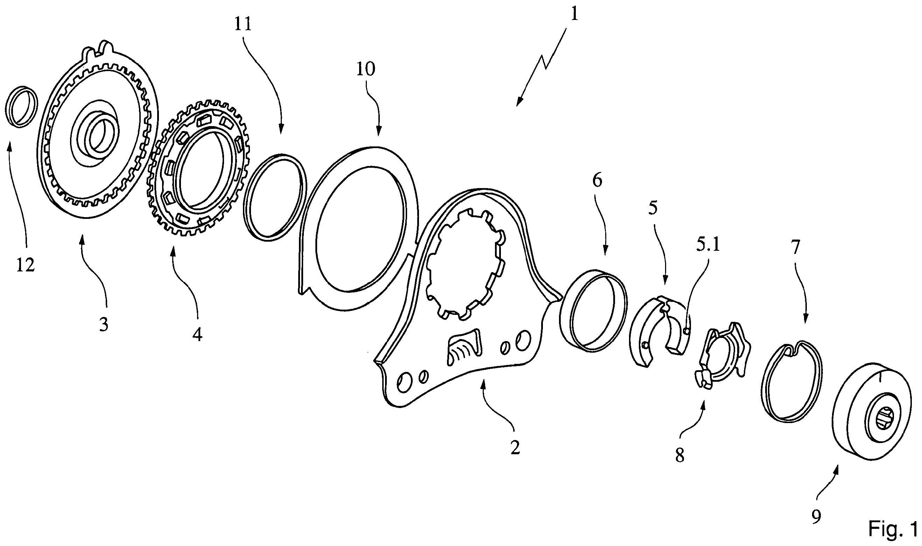

Figur 1 zeigt eine Explosionszeichnung einer Ausführungsform der erfindungsgemäßen Verstelleinrichtung. Die Verstelleinrichtung weist ein erstes Beschlagteil 2, den Sitzteiladapter, und ein zweites Beschlagteil 3, den Lehenadapter, auf, das direkt oder indirekt mit der Lehne des Fahrzeugsitzes verbunden ist. Der Sitzadapter 2 ist an dem Fahrzeugsitz befestigt, hier verschraubt. An dem Sitzadapter 2 ist drehbar ein Zahnrad 4 mit einer Außenverzahnung vorgesehen, die mit der Verzahnung des Lehenadapters kämmend zusammenwirkt und dadurch den Lehnenadapter winkelverstellt. Der Lehnenadapter 3 wird mit der Rückenlehne des Fahrzeugsitzes verbunden, vorzugsweise verschweißt. Der Fachmann erkennt, dass diese Funktionalitäten der beiden Adapter 2 und 3 auch vertauscht sein können. Die relative Lage des Lehnenadapters 3 relativ zum Sitzadapter 2 wird mittels eines Exzenters verändert, der zwei Keile 5 aufweist. Diese beiden Keile 5 sind bevorzugt symmetrisch und besonders bevorzugt spiegelsymmetrisch zu einer durch die Drehachse D verlaufenden Ebene angeordnet. Die beiden Keile 5 werden mit einem Kraftspeicher, hier einer Feder 7, vorzugsweise einer Ringfeder, deren Enden jeweils in eine Kerbe in den Keilen 5 eingreifen, auseinandergedrückt. Der Kraftspeicher 7 ist Teil des Exzenters. Außerdem sind die Keile 5 vorzugsweise zumindest teilweise in einer Lagerschale 6 angeordnet und stützen sich an dieser ab. Durch die Lagerschale 6 kann die Reibung zwischen dem Exzenter und dem Zahnrad 4 reduziert und ein gleichmäßiger Rundlauf des Exzenters erzielt werden. Des Weiteren weist die erfindungsgemäße Vorrichtung ein Antriebsmittel 9, auf, das manuell oder motorisch angetrieben wird. Dieses Antriebsmittel 9 überträgt seine Drehbewegung auf den Exzenter 5, so dass beim Drehen des Antriebes 9 das Zahnrad 4 in dem innenverzahnten Lehnenadapter 3 abrollt.

Der Exzenter dient, wie bereits erwähnt, zum Antrieb des außenverzahnten Zahnrades 4 innerhalb eines innenverzahnten, mindestens einen Zahn mehr aufweisenden, äußeren Zahnkranzes. Es handelt sich demnach vorzugsweise um ein sogenanntes Taumelgetriebe.

Erfindungsgemäß weist die Vorrichtung ein Bremsmittel 8 auf, das verhindert, das sich das erste Beschlagteil 2 relativ zum zweiten Beschlagteil 3 selbsttätig verstellt, d.h. ohne dass das Antriebsmittel 9 betätigt wird.

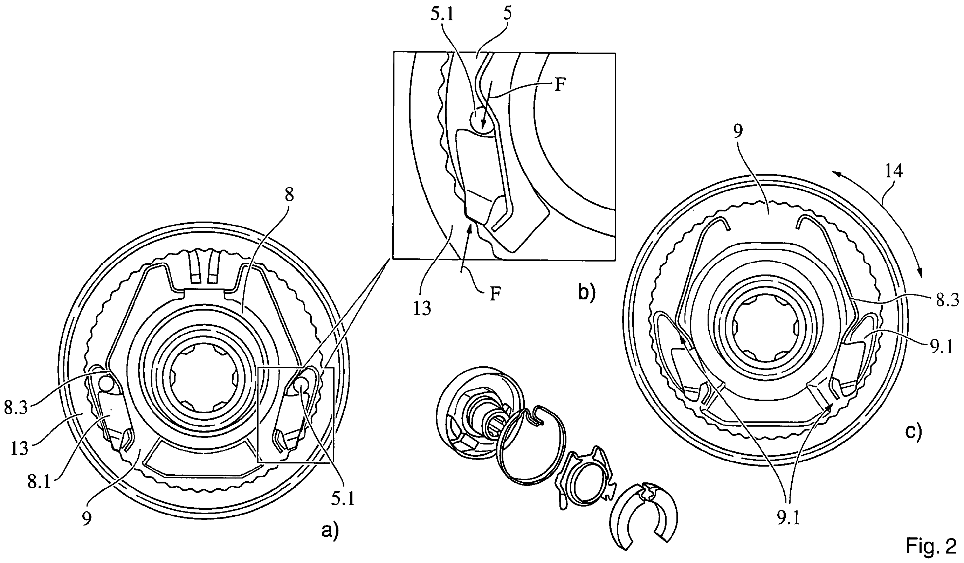

Figur 2 zeigt eine erste Ausführung des Bremsmittels 8. Dieses weist zwei Arme 8.2 auf, an deren Ende sich jeweils ein Blockierelement 8.1 befindet. Wie insbesondere Figur 2b entnommen werden kann, wirkt dieses Blockierelement 8.1 blockierend zwischen einem Vorsprung 5.1 des Exzenterantriebs 5 und einer Verriegelungskontur, hier einem Fixierring 13, die in dem vorliegenden Fall an dem Zahnrad 4 oder einstückig mit dem Zahnrad 4 vorgesehen ist, so zusammen, dass Selbstverstellkräfte F nicht zu einer Bewegung des Exzenters relativ beispielsweise zu dem Zahnrad 4 oder einem anderen Teil der Verstellvorrichtung führen können. Vorzugsweise wirkt ein Blockierelement 8.1 jeweils nur in eine Drehrichtung blockierend. Die Arme 8.2 sind in dem vorliegenden Fall vorgespannt, so dass sie die Blockierelemente 8.1 jeweils in Richtung der Verriegelungskontur 13, in eine von dessen Ausnehmungen, vorspannen. In Figur 2c ist die Entriegelung des Bremsmittels 8 dargestellt. Sobald das Antriebsmittel 9, wie beispielsweise durch den Pfeil 14 dargestellt ist, gedreht wird, wirkt jeweils ein Entriegelungsmittel 9.1 mit jeweils einer Entriegelungsrampe 8.3, die an dem Armen 8.2 vorgesehen, hier plastisch eingeformt, ist, so zusammen, dass der Arme 8.2 radial nach innen gedrückt wird und somit das Blockierelement 8.1 außer Eingriff mit dem Fixierring 13 gelangt. Somit kann die Verstellvorrichtung mittels des Antriebsmittels 9 in beide Drehrichtungen verstellt werden.

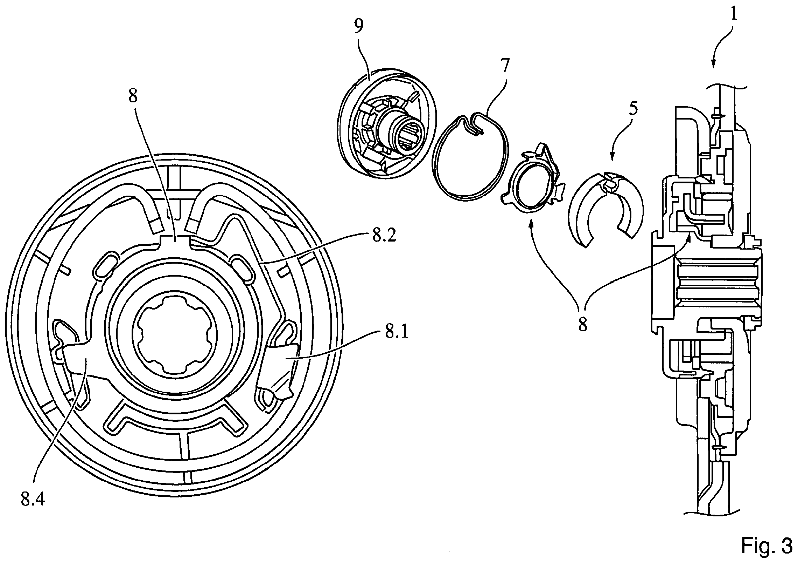

Figur 3 zeigt eine spezielle Ausführungsform des Verriegelungsmittels gemäß Figur 2. Im vorliegenden Fall weist das Bremsmittel 8 lediglich einen Arm 8.2 auf. An der anderen Seite des Bremsmittels 8 ist ein radialer Arm 8.4 vorgesehen, der nicht mit den Entriegelungsflächen 9.1 zusammenwirk und der einen Überhub erlaubt um Ratsch-Geräusche beim Verdrehen der Verstelleinrichtung zu vermeiden.

### Bezugszeichenliste:

- 1: Verstellvorrichtung
- 2: erstes Beschlagsteil, Sitzteil-Adapter
- 3: zweites Beschlagteil
- 4: Zahnrad
- 5: Exzenter, Keilsegment
- 5.1: Vorsprung
- 6: Gleitlager
- 7: Federmittel
- 8: Bremsmittel
- 8.1: Blockierelement
- 8.2: Arm, Federmittel
- 8.3: Rampe
- 8.4: radialer Arm
- 9: Antriebsmittel
- 9.1: Entriegelungsmittel, Entriegelungsfläche
- 10: Halteplatte
- 11: Verriegelungskontur, Fixierring
- 12: Haltering
- 13: Verriegelungskontur, Fixierring
- 14: Pfeil
- 15: Übertragungsmittel, Drehmomentübertragungsmitttel
- 15.1: Rampe
- D: Drehachse
- F: Selbstverstellungskräfte

## Patentansprüche

1. Verstellvorrichtung für eine Fahrzeugkomponente, insbesondere für die Rückenlehne eines Fahrzeugsitzes, mit einem ersten Beschlagteil (2) und einem zweiten Beschlagteil (3), die entlang einer Drehachse (D) angeordnet sind, wobei die relative Lage der beiden Beschlagteile (2, 3) zueinander mittels eines Exzenters (5) veränderbar ist, der ein Drehmoment von einem Antrieb (9) auf ein Zahnrad (4) überträgt, so dass dieses an dem zweiten Beschlagteil (3) abrollt und der vorzugsweise zwei Exzentermittel (5.1) umfasst, wobei die Verstellvorrichtung ein Bremsmittel (8) aufweist, das deren Selbstverstellung zumindest weitgehend verhindert, wobei das Bremsmittel (8) mit einer Verriegelungskontur (4.2, 11, 13), die an dem Zahnrad (4) vorgesehen ist, zusammenwirkt, **dadurch gekennzeichnet, dass** das Bremsmittel nur einen Arm aufweist, an dessen Ende ein Blockierelement vorgesehen ist.

2. Verstellvorrichtung nach Anspruch 1, **dadurch gekennzeichnet, dass** die Verriegelungskontur (4.2, 11, 13) im Bereich des inneren Durchmessers des Zahnrades vorgesehen ist.

3. Verstellvorrichtung nach einem der voranstehenden Ansprüche, **dadurch gekennzeichnet, dass** die Verriegelungskontur (4.2, 11, 13) kraft- und/oder stoffschlüssig mit dem Zahnrad (4) verbunden ist.

4. Verstellvorrichtung nach einem der Ansprüche 1 - 3, **dadurch gekennzeichnet, dass** die Verriegelungskontur (4.2, 11, 13) einstückig mit dem Zahnrad (4) vorgesehen ist.

5. Verstellvorrichtung nach einem der Ansprüche 3 - 4, **dadurch gekennzeichnet, dass** jeder Arm eine Rampe aufweist, die beispielsweise mit einem Antriebsmittel zusammenwirkt und dadurch das Bremsmittel wahlweise entriegelt.

6. Verstellvorrichtung nach einem der voranstehenden Ansprüche, **dadurch gekennzeichnet, dass** die axiale Erstreckung des Lagers des Zahnrades größer ist als die axiale Erstreckung der Zähne des Zahnrades.

7. Verstellvorrichtung nach Anspruch 6, **dadurch gekennzeichnet, dass** das Zahnrad (4) eine Dichtfläche (4.4) aufweist.

8. Verstellvorrichtung nach Anspruch 7, **dadurch gekennzeichnet, dass** die Dichtfläche in radialer Richtung vorgesehen ist.

9. Verstellvorrichtung nach einem der Ansprüche 7 oder 8, **dadurch gekennzeichnet, dass** die Dichtfläche (4.4) dichtend mit einer Abdeckung und/oder dem Antriebsmittel zusammenwirkt.

## Claims

1. Adjusting device for a vehicle component, in particular for the backrest of a vehicle seat having a first fitting part (2) and a second fitting part (3) which are arranged along a rotational axis (D), wherein the relative position of the two fitting parts (2, 3) to one another may be altered by means of an eccentric (5) which transmits a torque from a drive unit (9) to a gearwheel (4), so that said gearwheel rolls on the second fitting part (3), and which preferably comprises two eccentric means (5.1), wherein the adjusting device comprises a braking means (8) which at least substantially prevents the self-adjustment thereof, wherein the braking means (8) cooperates with a locking contour (4.2, 11, 13) which is provided on the gearwheel (4), **characterized in that** the braking means has only one arm, a blocking element being provided at the end thereof.

2. Adjusting device according to Claim 1, **characterized in that** the locking contour (4.2, 11, 13) is provided in the region of the internal diameter of the gearwheel.

3. Adjusting device according to either of the preceding claims, **characterized in that** the locking contour (4.2, 11, 13) is connected to the gearwheel (4) by a non-positive and/or material connection.

4. Adjusting device according to one of Claims 1 - 3, **characterized in that** the locking contour (4.2, 11, 13) is provided integrally with the gearwheel (4).

5. Adjusting device according to one of Claims 3 - 4, **characterized in that** each arm comprises a ramp which cooperates, for example, with a drive means and optionally unlocks the braking means thereby.

6. Adjusting device according to one of the preceding claims, **characterized in that** the axial extent of the bearing of the gearwheel is greater than the axial extent of the teeth of the gearwheel.

7. Adjusting device according to Claim 6, **characterized in that** the gearwheel (4) has a sealing surface (4.4).

8. Adjusting device according to Claim 7, **characterized in that** the sealing surface is provided in the radial direction.

9. Adjusting device according to one of Claims 7 and 8, **characterized in that** the sealing surface (4.4) sealingly cooperates with a cover and/or the drive means.

## Revendications

1. Dispositif de réglage pour un composant de véhicule, en particulier pour le dossier d'un siège de véhicule, comprenant une première partie de ferrure (2) et une deuxième partie de ferrure (3) qui sont disposées le long d'un axe de rotation (D), la position relative des deux parties de ferrure (2, 3) l'une par rapport à l'autre pouvant être modifiée au moyen d'un excentrique (5) qui transmet un mouvement de rotation d'un entraînement (9) à une roue dentée (4) de telle sorte que celle-ci roule sur la deuxième partie de ferrure (3) et qui comprend de préférence deux moyens d'excentrique (5.1), le dispositif de réglage présentant un moyen de freinage (8) qui empêche au moins substantiellement son réglage automatique, le moyen de freinage (8) coopérant avec une came de verrouillage (4.2, 11, 13) qui est prévue sur la roue dentée (4), **caractérisé en ce que** le moyen de freinage ne présente qu'un seul bras à l'extrémité duquel est prévu un élément de blocage.

2. Dispositif de réglage selon la revendication 1, **caractérisé en ce que** la came de verrouillage (4.2, 11, 13) est prévue dans la région du diamètre intérieur de la roue dentée.

3. Dispositif de réglage selon l'une quelconque des revendications précédentes, **caractérisé en ce que** la came de verrouillage (4.2, 11, 13) est connectée par engagement par force et/ou par liaison de matière à la roue dentée (4).

4. Dispositif de réglage selon l'une quelconque des revendications 1 à 3, **caractérisé en ce que** la came de verrouillage (4.2, 11, 13) est prévue d'une seule pièce avec la roue dentée (4).

5. Dispositif de réglage selon l'une quelconque des revendications 3 à 4, **caractérisé en ce que** chaque bras présente une rampe qui coopère par exemple avec un moyen d'entraînement et qui déverrouille ainsi de manière sélective le moyen de freinage.

6. Dispositif de réglage selon l'une quelconque des revendications précédentes, **caractérisé en ce que** l'étendue axiale du palier de la roue dentée est supérieure à l'étendue axiale des dents de la roue dentée.

7. Dispositif de réglage selon la revendication 6, **caractérisé en ce que** la roue dentée (4) présente une surface d'étanchéité (4.4).

8. Dispositif de réglage selon la revendication 7, **caractérisé en ce que** la surface d'étanchéité est prévue dans la direction radiale.

9. Dispositif de réglage selon l'une quelconque des revendications 7 ou 8, **caractérisé en ce que** la surface d'étanchéité (4.4) coopère de manière hermétique avec un recouvrement et/ou avec le moyen d'entraînement.
